(19) Europäisches Patentamt
European Patent Office
Office européen des brevets

(11) **EP 4 458 789 A1**

(12) **EUROPEAN PATENT APPLICATION**
published in accordance with Art. 153(4) EPC

(43) Date of publication:
06.11.2024 Bulletin 2024/45

(21) Application number: 22915945.4

(22) Date of filing: 23.12.2022

(51) International Patent Classification (IPC):
*C04B 38/00* (2006.01)   *C01B 33/32* (2006.01)
*C01B 33/40* (2006.01)   *C01B 33/42* (2006.01)
*C04B 12/04* (2006.01)   *C04B 28/26* (2006.01)
*C04B 35/00* (2006.01)

(52) Cooperative Patent Classification (CPC):
C01B 33/32; C01B 33/40; C01B 33/42;
C04B 12/04; C04B 28/26; C04B 35/00; C04B 38/00

(86) International application number:
PCT/JP2022/047601

(87) International publication number:
WO 2023/127722 (06.07.2023 Gazette 2023/27)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 27.12.2021 JP 2021212909

(71) Applicant: **JSP Corporation**
**Tokyo 100-0005 (JP)**

(72) Inventors:
• **NAITO, Naoki**
  **Kanuma-shi, Tochigi 322-0014 (JP)**
• **NORO, Jinichiro**
  **Kanuma-shi, Tochigi 322-0014 (JP)**

(74) Representative: **Dehns**
**10 Old Bailey**
**London EC4M 7NG (GB)**

(54) **INORGANIC FOAM**

(57)    An inorganic foam comprising an inorganic polymer having leucite crystal structure as a base material, the area of the peak derived from leucite crystal in the X-ray diffraction spectrum of the inorganic foam satisfies the following formula (1).

$$D(geo)/D(pur) \geqq 0.5 \cdots (1)$$

(In formula (1), D(geo) represents the area of the peak located at $2\theta = 27.3°$ derived from leucite crystal in the X-ray diffraction spectrum of the inorganic foam, and D(pur) represents the area of the peak located at $2\theta = 27.3°$ derived from leucite crystal in the X-ray diffraction spectrum of leucite pure material)

Fig.1

EP 4 458 789 A1

## Description

### Technical Field

The present invention relates to an inorganic foam.

### Background Art

A geopolymer, which is a type of inorganic material, is an amorphous condensation inorganic polymer produced by reacting aluminosilicate with alkali metal silicate. Additionally, the geopolymer are attracting attention as environmentally friendly materials because they emit a small amount of carbon dioxide from the production of raw materials to the production of products.

Specifically, the geopolymer is an inorganic polymer having a tetrahedral structure formed from $SiO_4$ and $AlO_4$. The geopolymer has a structure in which the tetrahedral network contains cations that give negative charges to $AlO_4$. Moreover, the geopolymer has mesopores.

Thus, geopolymer materials have the same mechanical strength as cement, despite their light weight. Furthermore, compared to cement, geopolymer materials can significantly reduce $CO_2$ emissions during manufacturing. For this reason, it has been proposed to use geopolymer materials as building materials such as block materials or exterior wall materials in place of cementitious materials or ceramic materials (Patent Literature 1).

### Citation List

### Patent Literature

Patent Literature 1 : JP2011 -219281

### Summary of Invention

### Technical Problem

On the other hand, a foam material in which cells are formed in a geopolymer material, which is an inorganic material, has improved heat insulation properties due to the cell structure. However, such materials have low density. For this reason, geopolymer foams have had problems as inorganic materials in that the compressive strength of the geopolymer material may decrease or it may become easily cracked.

The present invention has been made in view of the above circumstances. An object of the present invention is to provide an inorganic foam having high heat insulating properties and strength, in which the decrease in strength and the occurrence of cracks due to the formation of cells are suppressed.

### Solution to Problem

[1] An inorganic foam comprising an inorganic polymer having leucite crystal structure as a base material,

the area of the peak derived from leucite crystal in the X-ray diffraction spectrum of the inorganic foam satisfies the following formula (1).

$$D(geo) / D(pur) \geqq 0.5 \cdots (1)$$

(In formula (1), D(geo) is the area of the peak located at $2\theta = 27.3°$ derived from leucite crystal in the X-ray diffraction spectrum of the inorganic foam, and D(pur) is the area of the peak located at $2\theta = 27.3°$ derived from leucite crystal in the X-ray diffraction spectrum of leucite pure material)

[2] The inorganic foam according to the above [1],
wherein the inorganic polymer is a calcined product of a reaction product of aluminosilicate and alkali metal silicate.
[3] The inorganic foam according to the above [2],
the alkali metal of the alkali metal silicate is potassium, and the molar ratio of potassium to the total of potassium, aluminum, and silicon (K/K+Al+Si) in the inorganic foam is 0.1 or more.

[4]. The inorganic foam according to the above [2] or [3],
wherein the molar ratio of silicon to aluminum (Si/Al) in the inorganic foam is 1 or more.

[5] The inorganic foam according to any one of the above [1] to [4],
wherein the inorganic foam has a density of 150 to 1500 $kg/m^3$.

[6] The inorganic foam according to any one of the above [1] to [5],
wherein the inorganic foam has an average cell diameter of 0.1 to 5 mm.

[7]. A fire brick comprising the inorganic foam according to any one of the above [1] to [6].

Advantageous Effects of Invention

According to the present invention, it is possible to provide the inorganic foam having excellent strength, in which the decrease in strength and the occurrence of cracks due to the formation of cells are suppressed.

Brief Description of Drawings

Fig 1 is an actual photograph of a block-shaped molded product (length 230 mm, width 115 mm, thickness 60 mm) showing one embodiment of the inorganic foam of the present invention.
Fig. 2 is an example of an enlarged photograph showing the cell structure of the inorganic foam of Fig 1.

Description of Embodiments

The present inventors have discovered that the strength of the inorganic foam can be improved by using an inorganic polymer having leucite crystal structure as a base material, and have completed the present invention.

In the following description, the preferred numerical ranges of the invention may be indicated as appropriate. In such cases, the "preferred range," "more preferred range," and "particularly preferred range" for the upper and lower limits of the numerical range may be determined from all combinations of the upper and lower limits. The "A ~ B" indicating the numerical range is synonymous with "A to B" and is used as including the end points (A, B) of the numerical range.

Hereinafter, one embodiment of the inorganic foam of the present invention will be descri bed.

(Leucite)

In the inorganic foam of the present invention, the base material is an inorganic polymer having the leucite crystal structure. In other words, the inorganic foam of the present invention is composed of a base material containing an inorganic polymer. The inorganic polymer having the leucite crystal structure is an inorganic compound containing leucite. The chemical formula of leucite is $KAlSi_2O_6$ or $K_2O \bullet Al_2O_3 \bullet 4SiO_2$. In the present invention, the inorganic foam contains the inorganic polymer having the leucite crystal structure as the base material, so that the cell walls of the inorganic foam are formed by the inorganic polymer. Therefore, the strength of the cell wall can be improved. As a result, the inorganic foam having excellent heat resistance and strength can be obtained. The "base material" of the inorganic foam is the component whose ratio to the total mass of all components in said inorganic foam is greater than 50% by mass, preferably greater than 60% by mass, and even more preferably greater than 70% by mass.

The inorganic foam of the present invention is characterized in that the area of the peak derived from leucite crystal in the X-ray diffraction spectrum of the inorganic foam satisfies the following formula (1).

$$D(geo) \diagup D(pur) \geqq 0.5 \cdots (1)$$

In formula (1), D(geo) represents the area of the peak located at $2\theta = 27.3°$ derived from leucite crystal in the X-ray diffraction spectrum of the inorganic foam. D(pur) represents the area of the peak located at $2\theta = 27.3°$ derived from leucite crystal in the X-ray diffraction spectrum of leucite pure material.

From the viewpoint of obtaining the inorganic foam with better strength, it is preferable to satisfy the following formula (2), and more preferably to satisfy the following formula (3).

$$D(geo) \diagup D(pur) \geqq 0.7 \cdots (2)$$

$$D(geo) \diagup D(pur) \geqq 0.8 \cdots (3)$$

In the present invention, the peak at $2\theta=27.3°$ is used as the peak derived from leucite crystal in the X-ray diffraction spectrum. The peak area D (pur) at $2\theta = 27.3°$ of the leucite pure material and the peak area D (geo) at $2\theta = 27.3°$ of the inorganic foam of the present invention are measured and calculated. Then, the peak area ratio D (geo) in the inorganic foam to the peak area D (pur) in the leucite pure material is calculated. The peak of $2\theta=27.3°$ does not need to have a peak top of 27.3° as long as the peak includes 27.3°. The above peak area ratio D(geo)/D(pur) can be calculated, for example, by an X-ray diffraction method using an X-ray diffraction apparatus (Rigaku Denki Co., Ltd. RINT2550H (rotor flex type)). The upper limit of D(geo)/D(pur) is generally less than 1, preferably 0.95 or less.

(Inorganic foam)

The density of the inorganic foam of the present invention is preferably 150 to 1500 kg/m$^3$. If the density of the inorganic foam is too low, the cell walls of the inorganic foam may become too thin and the strength of the foam may become weak. On the other hand, if the density of the inorganic foam is too high, the heat insulation performance may decrease. From the above viewpoint, it is more preferable that the density of the inorganic foam be 180 to 1200 kg/m$^3$, 200 to 1000 kg/m$^3$ is even more preferable, 220 to 800 kg/m$^3$ is even more preferable, and 250 to 500 kg/m$^3$ is especially preferable.

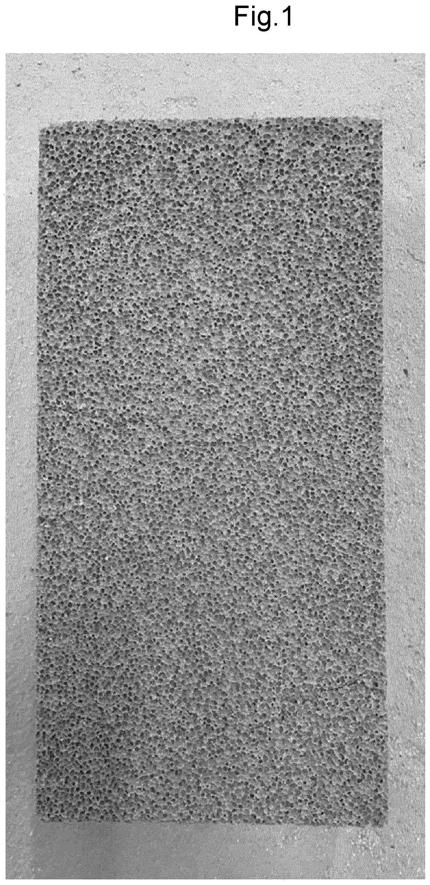

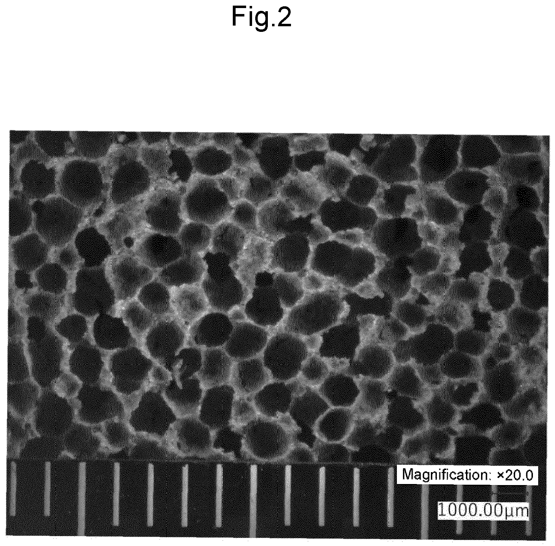

Moreover, the inorganic foam of the present invention has a cell structure formed of an inorganic polymer. This cell structure is formed by cell walls having a thickness of approximately 0.5 to 2 mm, as shown in Fig.1 and Fig.2. The porous structure formed by mesopores with a pore diameter of 100 nm or less existing in the cell wall portion is distinguished from the above-mentioned cell structure. The mesopores are preferably 2 nm or more and 50 nm or less. Further, the average cell diameter of the inorganic foam is preferably 0.1 to 5 mm. When the average cell diameter of the inorganic foam is within the above range, cell walls with excellent strength are likely to be formed. From this point of view, the average cell diameter of the inorganic foam is more preferably 0.5 to 3 mm, and even more preferably 0.8 to 2 mm.

For example, the above cell structure can be formed by using a foaming agent. Alternatively, the cell structure can be formed by using a spacer that has a particle size corresponding to the average cell size of the inorganic foam and can be removed by heating or the like.

The inorganic polymer of the present invention is preferably a calcined product of a reaction product of aluminosilicate and alkali metal silicate.

It is preferable that the molar ratio of silicon to aluminum (Si/Al) in the inorganic foam is 1 or more. When the molar ratio of silicon to aluminum (Si/Al) is within the above range, it becomes easier to form leucite in the inorganic foam. From the above viewpoint, the molar ratio (Si/Al) in the inorganic foam is preferably 1.2 to 5, more preferably 1.3 to 3. The above molar ratio (Si/Al) can be determined by elemental analysis of the inorganic foam. However, it can also be calculated from the ratio of aluminum and silicon in the raw material, since it is assumed that the ratio of aluminum and silicon in the raw material is maintained from the manufacturing process.

(Aluminosilicate)

Aluminosilicate ($xM_2O$-$yAl_2O_3$-$zSiO_2$-$nH_2O$, where M is an alkali metal) react with alkali metal silicate. At this time, aluminum ions are eluted and silicate monomer (silicic acid, $Si(OH)_4$) is produced in the aqueous solution (slurry). By polycondensing the produced silicate monomer and cations, a geopolymer having a polymer network with a tetrahedral structure of $SiO_4$-$AlO_4$ is produced.

Examples of aluminosilicate include beidellite, bentonite, kaolinite, halloysite, montmorillonite, pyrophyllite, vermiculite, mica, chlorite, saponite, sepiolite, and clay minerals such as acid clay, fly ash, red mud, silica fume, and Industrial waste such as sewage sludge incineration ash; natural aluminosilicate minerals and calcined products thereof (for example, metakaolin), volcanic ash, and other silicate minerals containing aluminum. Among these, aluminosilicate containing metakaolin (chemical formula: Al2O3.2SiO2) as a main component are preferred. In addition, by suitably pulverizing and classifying the above-mentioned substance and using a specific fraction, aluminosilicate having a desired composition can be adjusted.

(Alkali metal silicate)

When alkali metal silicate is dissolved in water, a highly alkaline aqueous solution is produced. By reacting this solution with aluminosilicate, cations such as Al can be eluted from aluminosilicate and silicate monomers can be produced. Alkali metal silicates are also a source of silicate monomers for forming the geopolymer by polycondensation.

Examples of the alkali metal silicate include one or more of potassium silicate, sodium silicate (water glass), lithium silicate. Among these, the alkali metal of the alkali metal silicate is preferably potassium.

(Reactant of aluminosilicate and alkali metal silicate)

When aluminosilicate and alkali metal silicate are reacted, a good polymer network with a tetrahedral structure is formed. That is, a geopolymer which is a reaction product of aluminosilicate and alkali metal silicate is produced. Furthermore, by calcining this geopolymer, the inorganic material containing the inorganic polymer having leucite crystal as a base material is produced.

(Aggregate)

Aggregate can be added to the inorganic foam of the present invention. Examples of the aggregate can be mica, wollastonite, chalk, talc, molokite, cordierite, basalt, feldspar, zircon, graphite, and borax. Another example of the aggregate includes one or more of crushed materials such as scraps of the inorganic foam and geopolymer foam of the present invention. The aggregate is preferably a powder having an average particle size of 50 $\mu$m or more and 300 $\mu$m or less. Furthermore, it is preferable that the aggregate contains mica. When the aggregate contains mica, the ratio of mica in the aggregate is preferably 50% by mass or more, more preferably 60% by mass or more, even more preferably 80% by mass or more, particularly it is preferably 90% by mass or more. Mica is a silicate mineral commonly called muscovite and has the chemical composition $KAl_2(AlSi_3O_{10})(F,OH)_2$. In the present invention, the term "mica" includes sheet-like silicate (phyllosilicate) minerals that are physically and chemically similar.

The content of the aggregate in the inorganic foam is preferably 5% by mass or more and 40% by mass or less, and more preferably 10% by mass or more and 30% by mass or less, based on 100% by mass of the inorganic foam. When the aggregate content is within this range, the strength of the inorganic foam is further improved.

When the aggregate contain mica, it is preferable that the average particle size of mica is 80 $\mu$m or more and 200 $\mu$m or less. When the average particle size of mica contained in the aggregate is within this range, a good cell structure is formed in the geopolymer foam produced as a precursor. Therefore, it is possible to suppress the miniaturization of the cells in the inorganic foam.

(Other additives)

The inorganic foam can contain other materials such as a foam nucleating agent, a reactive material, and reinforcing fibers, if necessary. Examples of reactive materials include one or more of the following materials: clays such as bentonite, sepiolite, minugel and attapulgite clays, cement binders, calcium aluminate cements, organic polymer binders (e.g. cellulose binders). By adding the reactive material, the reaction (curing) time of the foaming composition can be adjusted.

Reinforcing fibers can be added for the purpose of improving the strength of the inorganic foam and preventing cracks. Examples of reinforcing fibers include vinylon fibers, polypropylene fibers, aramid fibers, acrylic fibers, rayon fibers, carbon fibers, glass fibers, potassium titanate whiskers, alumina fibers, steel wool, and slag wool. The strength of geopolymer foams can be increased by adding reinforcing fibers. The amount of other materials added is not particularly limited as long as the intended purpose of the present invention can be achieved. The amount of other materials added is usually preferably 20 parts by mass or less, more preferably 10 parts by mass or less, per 100 parts by mass of the inorganic foam.

The inorganic foam of the present invention having the above characteristics has excellent heat resistance, heat insulation properties, and high strength. Therefore, the inorganic foam of the present invention can be particularly suitably used as a heat-resistant brick. For example, by using the inorganic foam as the inner wall material of the melting furnace, the furnace wall temperature is prevented from decreasing. Therefore, by increasing the heat retention of the furnace, it becomes possible to reduce the input heat itself, and significant energy savings can be expected.

(Production method)

An example of the method for producing the inorganic foam of the present invention is as follows. First, a composition containing, for example, aluminosilicate, alkali metal silicate, aggregate, water, and a forming agent is reacted and foamed to form a large number of geopolymer foam with cells formed therein is prepared. Thereafter, the geopolymer foam is calcined under specific conditions to cause the geopolymer foam to react, thereby producing leucite crystal. As a result, the inorganic foam having a large number of cells, excellent heat insulation properties, and high strength can be obtained. That is, the inorganic foam of the present invention is a calcined product of geopolymer foam.

(Aluminosilicate)

Aluminosilicate ($xM_2O$-$yAl_2O_3$-$zSiO_2$-$nH_2O$, where M is an alkali metal) react with alkali metal silicate. At this time, aluminum ions are eluted and silicate monomer (silicic acid, $Si(OH)_4$) is produced in the aqueous solution (slurry). By polycondensing the produced silicate monomer and cations, a geopolymer having a polymer network with a tetrahedral structure of $SiO_4 \cdot AlO_4$ is produced.

The content of $SiO_2$ (silicon dioxide) in the aluminosilicate is preferably 20% by mass or more and 80% by mass or less. When the content of $SiO_2$ is within this range, the manufactured geopolymer foam can easily form a good cell structure with a large number of cells. From this viewpoint, the content of $SiO_2$ is more preferably 30% by mass and 70% by mass or less. The content of $SiO_2$ and the content of $Al_2O_3$ in the aluminosilicate can be determined by quantifying each element using a fluorescent X-ray analyzer (for example, EA6000V manufactured by Hitachi High-Tech Science).

Further, the crystallinity of the aluminosilicate is preferably 20% or less, more preferably 10% or less. When the crystallinity of the aluminosilicate is within this range, when the aluminosilicate and alkali metal silicate are reacted in an aqueous solution, aluminum ions are more easily eluted from the aluminosilicate source. Furthermore, at this time, silicic acid monomers are easily produced, and polycondensation is stably performed. Therefore, it is easy to form a good cell structure in the inorganic foam.

The crystallinity of aluminosilicate can be determined by X-ray diffraction. For example, an X-ray analyzer with a two-dimensional detector (e.g., Rigaku Corporation, Rint 2550, etc.) can be used. The crystallinity can be measured by performing X-ray diffraction measurement on aluminosilicate powder in the $2\theta$ range of 10 to 40° at room temperature. The degree of crystallinity can be determined by the following method. Profile fitting is performed on the diffraction pattern measured by X-ray diffraction measurement. The ratio of the peak area of the crystalline component to the total peak area ([peak area of crystalline component] + [halo pattern area of amorphous component]) is calculated from the X-ray diffraction obtained.

Examples of the aluminosilicate include beidellite, bentonite, kaolinite, halloysite, montmorillonite, pyrophyllite, vermiculite, mica, chlorite, saponite, sepiolite, and clay minerals such as acid clay, fly ash, red mud, silica fume, and Industrial waste such as sewage sludge incineration ash; natural aluminosilicate minerals and calcined products thereof (for example, metakaolin), volcanic ash, and other silicate minerals containing aluminum. Among these, aluminosilicate containing metakaolin (chemical formula: Al2O3.2SiO2) as a main component are preferred. In addition, by suitably pulverizing and classifying the above-mentioned substance and using a specific fraction, the aluminosilicate having a desired composition can be adjusted.

Aluminosilicate is preferably a powder having an average particle size of 0.1 $\mu$m or more and 50 $\mu$m or less. When the average particle size of the aluminosilicate is within this range, the manufactured geopolymer foam will have a good cell structure and will have excellent heat insulation properties. From this viewpoint, the average particle size of the aluminosilicate is more preferably 0.3 $\mu$m or more and 30 $\mu$m or less.

The average particle size of the aluminosilicate and aggregate can be measured by laser diffraction scattering. Specifically, the volume-based particle size distribution measured by laser diffraction scattering is converted to a number-based particle size distribution by assuming the particle shape to be a sphere. The arithmetic mean of the particle diameters based on this number-based particle size distribution is used to obtain the number-based arithmetic mean particle diameter. The "average particle size" in the present invention is the number-based arithmetic mean particle diameter. The average particle size means the diameter of a virtual sphere having the same volume as the particle.

In one embodiment using the aluminosilicate containing metakaolin as a main component, the ratio of metakaolin in the aluminosilicate is preferably 50% by mass or more. When the ratio of metakaolin in the aluminosilicate is within the above range, a good cell structure with a large number of cells is likely to be formed in the inorganic foam. From this viewpoint, the ratio of metakaolin in the aluminosilicate is more preferably 60% by mass or more, even more preferably 80% by mass or more, and particularly preferably 90% by mass or more.

The content of $Al_2O_3$ in the aluminosilicate is preferably 20% by mass or more, more preferably 30% by mass or more, based on the total mass of the aluminosilicate. Further, the content of $Al_2O_3$ in the aluminosilicate is preferably 80% by mass or less, more preferably 70% by mass or less. When the content of $Al_2O_3$ in the aluminosilicate is within this range, it is easier to increase the strength of the inorganic foam.

(Alkali metal silicates)

When alkali metal silicate is dissolved in water, a highly alkaline aqueous solution is produced. By reacting this solution with aluminosilicate, cations such as Al can be eluted from aluminosilicate and silicate monomers can be produced. Alkali metal silicates are also a source of silicate monomers for forming the geopolymer by polycondensation.

Examples of the alkali metal silicate include one or more of potassium silicate, sodium silicate (water glass), lithium silicate, and the like. In this producing method, materials containing these components can be used as materials. Further, the alkali metal silicate can be suitably used, for example, in the form of an aqueous solution (the alkali metal silicate aqueous solution) in which alkali metal silicate are dissolved in water. In particular, potassium is preferred as the alkali metal of the alkali metal silicate. Alkali metal hydroxides such as potassium hydroxide and sodium hydroxide can be added to the aqueous alkali metal silicate solution to adjust the hydrogen ion concentration of the solution and obtain an aqueous solution that exhibits the desired alkalinity.

The molar ratio of silicon to alkali metal in the aqueous alkali metal silicate solution is preferably 0.1 or more and 5 or less, more preferably 0.3 or more and 3 or less. When the molar ratio of silicon to alkali metal is within the above range, the strength of the geopolymer foam can be further increased.

Further, for example, the concentration of the alkali metal silicate in the aqueous alkali metal silicate solution is preferably 20% by mass or more and 80% by mass or less, more preferably 25% by mass or more and 70% by mass or less, especially preferably 30% by mass or more and 60% by mass or less. When the concentration of the alkali metal silicate is within this range, the fluidity of the slurry obtained by mixing the aluminosilicate and the aqueous alkali metal silicate solution increases, and the foam moldability of the foaming composition can be improved. Furthermore, when the concentration of the alkali metal silicate is within this range, geopolymer foam with excellent strength comprising a good polymer network with a tetrahedral structure can be stably obtained.

In one embodiment where the alkali metal of the alkali metal silicate is potassium, the molar ratio of potassium to the total of potassium, aluminum, and silicon (K/K+Al+Si) in the inorganic foam is preferably 0.1 or more, more preferably 0.2 to 0.4. The above molar ratio (K/K+Al+Si) can be determined by elemental analysis of the inorganic foam. It is also believed that the blending ratio of potassium, aluminum, and silicon in the raw materials is maintained in the geopolymer and inorganic foam during the manufacturing process. Therefore, the above molar ratio (K/K+Al+Si) can also be calculated from the blending ratio of the raw materials.

Specifically, the production method of the present invention preferably includes the following first to fourth steps.

First step of preparing of slurry by mixing the mixture A containing the aluminosilicate and aggregate with an aqueous alkali metal silicate solution;

Second step of adding a foaming agent to the slurry to obtain a foaming composition;

Third step of obtaining geopolymer foam having a large number of cells comprising foaming the foaming composition to form a large number of cells in the reaction product of the aluminosilicate and the alkali metal silicate, thereafter solidifying the reaction product;

Fourth step of calcining the geopolymer foam as a precursor to obtain the inorganic foam containing leucite.

Each step will be explained below.

(First step)

In the first step, the slurry is prepared by mixing the mixture A containing the aluminosilicate and aggregate with an aqueous alkali metal silicate solution. The method of mixing materials in the first step is not particularly limited. Usually, the materials can be mixed at room temperature (25°C) using a known or customary mixer (e.g., mortar mixer, tilting mixer, track mixer, twin-shaft mixer, omni mixer, pan mixer), planetary mixer, Eirich mixer, etc.). The order in which each material is added to a mixer or the like is not particularly limited.

When mixing the mixture A and the aqueous alkali metal silicate solution to form a slurry, it is preferable to add the aqueous alkali metal silicate solution from 30 parts by mass to 300 parts by mass, more preferably 50 parts by mass or more and 200 parts by mass or less, based on 100 parts by mass of mixture A. When the amount of the aqueous alkali metal silicate solution added is within the above range, each component in the foaming composition can be uniformly dispersed.

The amount of water added to adjust the viscosity can be appropriately determined in consideration of the viscosity of the slurry or foaming composition, the compressive strength of the resulting molded product, etc., and is not particularly limited. However, the amount of water added is usually preferably 20% by mass or more and 50% by mass or less, and more preferably 25% by mass or more and 45% by mass or less, based on 100% by mass of the foaming composition in the second step. Water may be added separately. Water may also be added as a solvent, such as when water glass is used as alkali metal silicate.

The viscosity of the slurry obtained by mixing the mixture A and the aqueous alkali metal silicate solution is preferably 1 Pa ▪ s or more and 5 Pa ▪ s or less, more preferably 2 Pa ▪ s or more and 4 Pa ▪ s or less. By adjusting the viscosity to a relatively low value within the above slurry viscosity range, it is possible to stably increase the ratio of cells having a volume of a specific value or more in the foam.

Further, in the first step, the slurry obtained by mixing the aluminosilicate and the alkali metal silicate preferably has a molar ratio of Si to Al (Si/Al) of 1 or more. When the molar ratio (Si/Al) of the slurry is within this range, exchangeable cations can be appropriately present in the generated geopolymer foam, and a good cell structure can be formed. From this viewpoint, the molar ratio (Si/Al) in the slurry is more preferably 1.1 or more, and even more preferably 1.2 to 5.0.

(Second step)

In the second step, a foaming agent is added to the slurry obtained in the first step to obtain a foaming composition. Examples of the blowing agent include hydrogen peroxide, sodium peroxide, potassium peroxide, sodium perborate, and nonferrous metal powder. An example of the non-ferrous metal powder is aluminum powder. Among these, it is preferable to use at least one of hydrogen peroxide solution and nonferrous metal powder, and it is more preferable to use hydrogen peroxide. Furthermore, when hydrogen peroxide is used as a foaming agent, it is preferably used as a hydrogen peroxide solution. In this case, the concentration of hydrogen peroxide in the hydrogen peroxide solution is preferably 10% by mass or more and 50% by mass or less. When the concentration of hydrogen peroxide in the hydrogen peroxide solution is within this range, the foaming composition can be stably foamed, and the inorganic foam having a good cell structure can be easily obtained. From this viewpoint, the concentration of hydrogen peroxide in the hydrogen peroxide solution is more preferably 20% by mass or more and 40% by mass or less.

Further, the amount of the foaming agent added can be appropriately determined depending on the embodiment of the inorganic foam to be produced, and is not particularly limited. For example, when hydrogen peroxide is used as a foaming agent, the amount of hydrogen peroxide added is preferably 0.1% by mass or more and 5% by mass or less, based on 100% by mass of the foaming composition. It is more preferably 2% by mass or more and 3% by mass or less, and even more preferably 0.2% by mass or more and 2% by mass or less. When the amount of hydrogen peroxide added is within the above range, the foaming composition can be sufficiently foamed, and the geopolymer foam having excellent heat insulation properties can be stably obtained.

(Third step)

In the third step, the foaming composition obtained in the second step is foamed. As a result, a large number of cells are formed in the reaction product of the aluminosilicate and the alkali metal silicate, and a geopolymer foam having a large number of cells is obtained.

In the third step, the foaming composition obtained in the second step can be molded into a desired shape suitable for a heat insulating material by using various molding methods. Examples of the molding method include a casting method, a dehydration molding method, and an extrusion molding method. In the casting method, a foaming composition is poured into a mold and molded. The dehydration molding method includes, for example, pressing the foaming composition in a mold, or dehydrating the foaming composition by sucking moisture therein, and molding the foaming composition. In the extrusion molding method, using an extruder or the like, a foaming composition is extruded from a die provided on the downstream side of the extruder, and the foaming composition is molded while being foamed.

Conditions for foaming the foaming composition are appropriately determined depending on the desired physical properties of the geopolymer foam. For example, when a foaming composition is foamed by a casting method, the geopolymer foam can be obtained by reacting and foaming the foaming composition in a mold under conditions of a temperature of 20 to 100°C, preferably 50 to 80°C, and a holding time of 30 minutes to 24 hours.

For example, in the third step, when performing a casting method, the size of cells formed by foaming the foaming composition increase during about 30 minutes to 1 hour after adding the foaming agent. The geopolymer foam typically have mesopores derived from the geopolymer structure. A distinction can be made between such mesopores and the large number of cells formed by the foaming agent.

The method for producing the inorganic foam of the present invention is different from physical foaming in which cells are formed by stirring or the like. In the method for producing the inorganic foam of the present invention, cells are gradually grown and foamed by adding a foaming agent. Therefore, the cells are less likely to become fine, and there is less unevenness in the cell diameter. In the method for producing the inorganic foam of the present invention, the inorganic foam having the uniform cell structure can be obtained.

(Fourth step)

In the fourth step, the geopolymer foam obtained in the third step is calcined to obtain the inorganic foam containing the inorganic polymer having the leucite crystal structure as a base material (i.e., a calcined product of the geopolymer foam). The method for firing the geopolymer foam is not particularly limited as long as it can be heated and fired to a predetermined temperature or higher.

Usually, the fourth step can be performed by calcining the geopolymer foam in a firing furnace or the like. In the fourth step, the cell structure of the geopolymer foam is maintained. Therefore, the inorganic foam of the present invention contains the inorganic polymer having the leucite crystal structure as a base material and has cell walls.

It is important that the inorganic foam of the present invention contains leucite. Leucite can be produced by calcining the geopolymer foam at a calcining temperature of 1100° C. or higher. Therefore, the calcining temperature in the fourth step is preferably 1100° C. or higher. Furthermore, the production ratio of leucite tends to increase by increasing the calcining temperature. Furthermore, the strength of the inorganic foam improves depending on the production ratio of leucite. From this viewpoint, the calcining temperature in the fourth step is more preferably 1200°C or higher, and even more preferably 1300°C or higher. Further, the calcining time in the fourth step is preferably 1 to 24 hours.

By the calcining in the fourth step, an inorganic polymer having the leucite crystal structure is produced as a base material of the inorganic foam. Thereby, the compressive strength of the obtained inorganic foam can be improved. It is believed that the strength of the inorganic foam in the compression direction is determined by the strength of its thin cell walls. That is, by forming the cell walls of the inorganic foam with the inorganic polymer having the leucite crystal structure, the strength of the cell membrane is improved, the compressive strength is improved, and the occurrence of cracks in the inorganic foam is suppressed.

The inorganic foam preferably contains leucite and aggregate, preferably has a density of 150 to 1500 kg/m$^3$, and preferably has an average cell diameter of 0.1 to 5 mm. Thereby, the inorganic foam of the present invention can be suitably used as a fireproof heat insulating material with excellent heat insulating properties and strength.

(Molding and molded body in mold)

In producing the inorganic foam of the present invention, first, the aluminosilicate and the alkali metal silicate are reacted to form a slurry. Next, this slurry is placed into a mold. Separately, the foaming agent is added to the slurry. Thereafter, the mold is heated to further react the aluminosilicate and the alkali metal silicate to polymerize and harden them. The foaming agent added to the slurry causes the formation of cells, resulting in the geopolymer foam. Then, by calcining the geopolymer foam, an in-mold molded body of the inorganic foam that reflects the shape of the mold can be obtained. By the above method, it is possible to obtain a block-shaped molded body, which can be used as a heat insulating material for fire bricks and the like.

Further, in the inorganic foam of the present invention, the strength is improved due to the production of leucite. Therefore, cracking and chipping of the molded body due to shrinkage during firing can be effectively prevented.

It is preferable that the in-mold molded body made of the inorganic foam of the present invention has a thermal conductivity of 0.05 W/m·K or less at room temperature. When the thermal conductivity of the in-mold molded body at room temperature is within the above range, in-mold molded has excellent heat insulation properties.

In the in-mold molded article made of the inorganic foam of the present invention, the strength of the cell walls forming the cell structure is particularly excellent. Therefore, the reheating shrinkage rate upon heating at 1200° C. is preferably 4% or less, more preferably 3% or less. Therefore, the in-mold molded body has excellent physical properties as a fire bricks.

In the in-mold molded article made of the inorganic foam of the present invention, the strength of the cell walls forming the cell structure is particularly excellent. Therefore, the compressive strength is preferably 0.3 to 3 MPa, more preferably 0.5 to 2 MPa. Therefore, the in-mold molded body has excellent physical properties as a fire bricks.

[Example]

Hereinafter, the inorganic foam of the present invention will be explained along with examples, but the inorganic foam of the present invention is not limited to the following examples.

(Materials)

An inorganic foam was produced using the following raw materials.

- Aluminosilicate: Metakaolin (manufactured by Imerys: Argical M1200S, crystallinity 0%)
- Alkali metal silicate: Potassium silicate (manufactured by NIPPON CHEMICAL INDUSTRIAL CO.,LTD: 2K potassium silicate)
- Aggregate: Mica (manufactured by Seishin Enterprises Co., Ltd: C100M)
- Foam nucleating agent: Talc (Matsumura Sangyo Co., Ltd: Hi-filler5000PJS)
- Foaming agent: Hydrogen peroxide solution (manufactured by FUJIFILM WAKO PURE CHEMICAL CORPORATION.: hydrogen peroxide concentration 30% by mass)
- Potassium hydroxide (FUJIFILM WAKO PURE CHEMICAL CORPORATION. Special grade)

(Method for producing the inorganic foam)

Mixture A was obtained by mixing the aluminosilicate (metakaolin) and aggregate (mica) in the proportions shown in Table 1. Further, potassium silicate, potassium hydroxide, and distilled water were mixed as necessary to prepare an aqueous alkali metal silicate solution. (Concentration of the alkali metal silicate shown in the table; for example, when the concentration of the alkali metal silicate is 36.5% by weight, the molar ratio of silicic acid to potassium: 0.63)

A slurry was prepared by mixing mixture A and an aqueous alkali metal silicate solution in the proportions shown in Table 1 and stirring at a stirring speed of 60 rpm. The slurry has Si/Al=1.4 and a viscosity of about 3 Pa ▪ s. Next, the foaming agent (hydrogen peroxide solution) was added to the slurry in the proportions shown in Table 1. A foaming composition was prepared by stirring this slurry for 1 minute at a stirring speed of 60 rpm using a stirring spatula.

Next, a mold frame (molding die) with a molding space of 680 mm (length) × 280 mm (width) × 100 mm (thickness) was used. The foaming composition was injected into this mold frame, the molding die was sealed, and the mold was kept in an oven at a temperature of 60°C for 1 hour. The geopolymer foam was obtained by reacting the foaming composition to polymerize and foam, and curing it with cells formed. When heating the foaming composition in the oven, the pressure inside the mold was atmospheric pressure. When heating the foaming composition, foaming was completed in about 30 minutes, and solidification was completed in about 1 hour. Thereafter, the mold was opened and the geopolymer foam was taken out. Furthermore, the geopolymer foam was dried by holding it at 60° C. for about 1 day. This geopolymer foam is used as a precursor before calcining.

Next, the produced geopolymer foam was heated in a firing furnace from room temperature to 1200°C at a temperature increase rate of 5°C/min for 4 hours. Thereafter, the temperature was maintained at 1200° C. for 1 hour, and then calcining was performed for 5 hours. After firing, heating was stopped and the mixture was allowed to cool naturally (for 24 hours) from 1200°C to room temperature to obtain the inorganic foam (calcined product). In addition, in the case of making a block-shaped in-mold molded body, for example, the geopolymer foam was cut into a block shape of 253 mm long × 125 mm wide × 72 mm thick before calcining. By calcining the geopolymer foam, a block-shaped in-mold molded body with a length of 230 mm, a width of 115 mm, and a thickness of 60 mm was obtained. This sample (length 230 mm, width 115 mm, thickness 60 mm) could be used as a refractory brick (JIS R2101 shape and dimensions of refractory brick).

Regarding the obtained inorganic foam, density before calcining, density after calcining, Si/Al molar ratio, K/(Si+Al+K) molar ratio, peak area ratio of leucite, cell diameter (average cell diameter, cell diameter standard deviation), compressive strength, compressive strength improvement rate, thermal conductivity, reheating shrinkage rate, and occurrence of cracks were measured and observed using the following methods. The results are shown in Table 1.

(Peak area ratio of leucite)

The peak area ratio of leucite (D(geo)/D(pur)) was determined. Specifically, an X-ray analysis device (RINT2550H (rotor flex type) manufactured by Rigaku Denki Co., Ltd.) was used. As the pure leucite material, high-purity crystal leucite, which is commercially available as a pure material from Nichika Co., Ltd., was used. By performing X-ray analysis measurements on inorganic foam and pure leucite material, the peak area ratio (D (geo) / D (pur)) around 27.3° where a peak derived from leucite crystal can be seen was calculated and obtained. The pure leucite material and the inorganic foam were ground and measured as powders. The measurement conditions were performed in accordance with JIS K0131 (1996) (Tube CuK$\alpha$, output 40kV, 30mA, measurement angle 2$\theta$ = 3.0° to 90.0°, sampling interval 0.02°, scanning speed 0.6 seconds/degree).

(Cell diameter)

Image data of the cross section of the test piece was acquired at a magnification of 20 times using a measuring device (digital microscope VHX-7000 manufactured by Keyence Corporation). In this image data, the area of each bubble was measured using image processing software NS2K-pro manufactured by Nano System Co., Ltd. The cell diameter was determined by converting the area of each obtained cell into a circle, determining the diameter when converted into a circle, and calculating the arithmetic average of each of these values.

The cells existing within the cell walls were excluded from the measurement of the cell diameter. In addition, cells whose cell walls were thought to be missing when the cross section of the test piece was prepared were also excluded from the measurement of the cell diameter.

The detailed measurement conditions for specifying the bubble diameter were as follows.

Monochrome conversion, smoothing filter (3 × 3, 8 neighborhoods, number of processing = 1), density unevenness correction (brighter than background, size = 5), NS method binarization (darker than background, sharpness = 9, sensitivity = 1, noise removal, density range = 0 to 255), shrinkage (8 neighborhoods, number of processing = 1), image selection by feature amount (area) (select only 10000 to ∞$\mu$m2, 8 neighborhoods), not connected to neighbors Expansion (8 neighborhoods, number of processing = 3), measurement of each circle equivalent diameter (calculated from area, 8 neighborhoods)

(Compressive strength)

A test piece (size: compressed surface 1 × 1 cm, height 3 cm) was cut out for each inorganic foam. Then, the compressive strength of the test piece was measured at a loading rate of 0.5 mm/s in accordance with the test method of JIS R1608 (compressive strength of fine ceramics).

(Improvement rate of the compressive strength)

Based on the compressive strength of the unfired geopolymer foam, the improvement rate (%) of the compressive strength of the inorganic foam after calcining was calculated as the compressive strength improvement rate.

(Thermal conductivity)

Thermal conductivity was measured for each test piece. Thermal conductivity was measured using a thermal conductivity measurement device (HC-074-200) under room temperature measurement conditions in accordance with the measurement method of JIS A1412 (thermal resistance and thermal conductivity of thermal insulation materials).

(Reheating shrinkage rate)

Each test piece of inorganic foam was calcined again in the calcining furnace at 1200°C for 5 hours. The reheat shrinkage rate was measured based on the dimensional change of the test piece after calcining compared to the test piece before calcining.

(Cracking)

Each test piece was visually checked for cracking.

[Table 1]

| | | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|
| Production conditions | Aluminosilicate | Mass part | 25.3 | 25.3 | 25.3 | 25.3 | 25.3 | 27,8 | 17.9 | 25.3 | 25.3 | 25.3 | 25.3 | 25.3 | 27.8 | 17.9 |
| | Aggregate | Mass part | 24.1 | 24.1 | 24.1 | 24.1 | 24.1 | 24.1 | 24.1 | 24.1 | 24.1 | 24.1 | 24.1 | 24.1 | 24.1 | 24.1 |
| | | Average particle size [$\mu$m] | 112 | 112 | 112 | 112 | 112 | 112 | 112 | 112 | 112 | 112 | 112 | 112 | 112 | 112 |
| | Aqueous alkali metal silicate solution | Mass part | 50.5 | 50.5 | 50.5 | 50.5 | 50.5 | 48.1 | 58.0 | 50.5 | 50.5 | 50.5 | 50.5 | 50.5 | 48.1 | 58.0 |
| | | Alkali metal silicate concentration mass% | 36.5 | 36.5 | 36.5 | 36.5 | 36.5 | 35.7 | 46.7 | 36.5 | 36.5 | 36.5 | 36.5 | 36.5 | 35.7 | 46.7 |
| | Foam nucleating agent | Mass part | 1.3 | 1.3 | 1.3 | 1.3 | 1.3 | 1.3 | 1.3 | 1.3 | 1.3 | 1.3 | 1.3 | 1.3 | 1.3 | 1.3 |
| | Foaming agent | Mass part | 1.5 | 1.5 | 1.5 | 1.1 | 2.5 | 1.5 | 1.5 | 1.5 | 1.5 | 1.5 | 0.8 | 2.0 | 1.5 | 1.5 |
| | Calcining temperature | °C | 1100 | 1200 | 1300 | 1200 | 1200 | 1200 | 1200 | 1050 | 1000 | - | - | - | - | - |
| Geopolymer foam | Density before calcining | kg/m$^3$ | 282 | 283 | 289 | 365 | 206 | 399 | 302 | 275 | 275 | 275 | 436 | 250 | 399 | 302 |

| | | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|
| inorganic foam | Density after calcining | kg/m³ | 332 | 339 | 340 | 425 | 234 | 424 | 309 | 311 | 307 | | | | | |
| | Si/Al molar ratio | | 1.4 | 1.4 | 1.4 | 1.4 | 1.4 | 1.3 | 1.9 | 1.4 | 1.4 | 1.4 | 1.4 | 1.4 | 1.3 | 1.9 |
| | K/(Si+Al+K) molar ratio | | 0.25 | 0.25 | 0.25 | 0.25 | 0.25 | 0.27 | 0.32 | 0.25 | 0.25 | 0.25 | 0.25 | 0.25 | 0.27 | 0.32 |
| | Peak area ratio of leucite | | 0.87 | 0.88 | 0.90 | 0.89 | 0.86 | 0.76 | 0.56 | - | - | - | - | - | - | - |
| | Average cell diameter | mm | 1.1 | 1.1 | 1.1 | 0.8 | 1.8 | 1.3 | 1.0 | 0.4 | 0.5 | 0.5 | 0.8 | 1.8 | 1.4 | 1.0 |
| | Cell diameter standard deviation | mm | 0.3 | 0.3 | 0.3 | 0.2 | 0.5 | 0.6 | 0.3 | 0.4 | 0.4 | 0.4 | 0.2 | 0.5 | 1.3 | 0.7 |
| | Compressive strength | MPa | 1.3 | 1.4 | 1.5 | 2.2 | 0.5 | 1.8 | 0.7 | 0.7 | 0.4 | 0.7 | 1.5 | 0.4 | 1.0 | 0.6 |
| | Compressive strength improvement rate | % | 87.5 | 100 | 114 | 47 | 25 | 80 | 17 | 0 | -43 | 0 | 0 | 0 | 0 | 0 |
| | Thermal conductivity (room temperature) | | 0.08 | 0.08 | 0.08 | 0.09 | 0.06 | 0.09 | 0.08 | 0.08 | 0.08 | 0.08 | 0.09 | 0.06 | 0.09 | 0.08 |
| | Reheating shrinkage rate (1200°C) | % | 0 | 0 | 0 | 0 | 0 | 0 | 0 | 6 | 7 | 9 | 9 | 9 | 6 | 5 |
| | Occurrence of cracks | | none | none | none | none | none | none | none | none | none | - | - | - | - | - |

Examples 1 to 7 are examples of inorganic foams containing the inorganic polymer having the leucite crystal structure as the base material, which were obtained by calcining the geopolymer foams at the specific temperature. Examples 1-7 had improved compressive strength compared to the geopolymer foam.

Comparative Example 1 is an example of calcining geopolymer foam at 1050°C. In Comparative Example 1, the X-ray diffraction spectrum did not show a peak at $2\theta = 27.3°$ derived from leucite. On the other hand, in Comparative Example 1, a peak derived from caryophyllite was observed in the X-ray diffraction peak. In other words, Comparative Example 1 does not contain the inorganic polymer with the leucite crystal structure. Comparative Example 1 contained caryophyllite with brittle properties. Therefore, the compressive strength of Comparative Example 1 was unchanged compared to the geopolymer foam.

Comparative Example 2 is an example of calcining geopolymer foam at 1000°C. In Comparative Example 2, the X-ray diffraction spectrum did not show a peak at $2\theta = 27.3°$ derived from leucite. On the other hand, in Comparative Example 2, a peak derived from caryophyllite was observed in the X-ray diffraction peak. In other words, Comparative Example 2 does not contain the inorganic polymer with the leucite crystal structure. Comparative Example 2 contained caryophyllite with brittle properties. Therefore, Comparative Example 2 had lower compressive strength than the geopolymer foam.

Comparative Example 3 is the geopolymer foam and corresponds to the geopolymer foam used in Examples 1-3. That is, Comparative Example 3 is an example that does not contain the inorganic polymer having the leucite crystal structure. In Comparative Example 3, no peak at $2\theta=27.3°$ derived from leucite was observed in the X-ray diffraction spectrum.

Comparative Examples 4 and 5 are the geopolymer foams. The densities (densities before calcining) of the geopolymer foams of Comparative Examples 4 and 5 correspond to the densities (densities after calcining) of the inorganic foams according to Examples 4 and 5, respectively. When the geopolymer foams and the inorganic foams have similar densities, the compressive strength of the geopolymer foams (examples that do not contain the inorganic polymer with the leucite crystal structure) was inferior to the calcined inorganic foams (the example containing the inorganic polymer having the leucite crystal structure).

## Claims

1. An inorganic foam comprising an inorganic polymer having leucite crystal structure as a base material,

   the area of the peak derived from leucite crystal in the X-ray diffraction spectrum of the inorganic foam satisfies the following formula (1).

$$D(geo) \diagup D(pur) \geqq 0.5 \cdots (1)$$

   (In formula (1), D(geo) represents the area of the peak located at $2\theta = 27.3°$ derived from leucite crystal in the X-ray diffraction spectrum of the inorganic foam, and D(pur) represents the area of the peak located at $2\theta = 27.3°$ derived from leucite crystal in the X-ray diffraction spectrum of leucite pure material)

2. The inorganic foam according to claim 1,
   wherein the inorganic polymer is a calcined product of a reaction product of aluminosilicate and alkali metal silicate.

3. The inorganic foam according to claim 2,
   the alkali metal of the alkali metal silicate is potassium, and the molar ratio of potassium to the total of potassium, aluminum, and silicon (K/K+Al+Si) in the inorganic foam is 0.1 or more.

4. The inorganic foam according to claim 2 or 3,
   wherein the molar ratio of silicon to aluminum (Si/Al) in the inorganic foam is 1 or more.

5. The inorganic foam according to any one of claims 1 to 4,
   wherein the inorganic foam has a density of 150 to 1500 kg/m$^3$.

6. The inorganic foam according to any one of claims 1 to 5,
   wherein the inorganic foam has an average cell diameter of 0.1 to 5 mm.

7. A fire brick comprising the inorganic foam according to any one of claims 1 to 6.

# Fig.1

# Fig.2

## INTERNATIONAL SEARCH REPORT

International application No.

**PCT/JP2022/047601**

**A. CLASSIFICATION OF SUBJECT MATTER**

*C04B 38/00*(2006.01)i; *C01B 33/32*(2006.01)i; *C01B 33/40*(2006.01)i; *C01B 33/42*(2006.01)i; *C04B 12/04*(2006.01)i;
*C04B 28/26*(2006.01)i; *C04B 35/00*(2006.01)i
FI:  C04B38/00 303Z; C04B28/26; C04B12/04; C01B33/32; C01B33/42; C01B33/40; C04B35/00

According to International Patent Classification (IPC) or to both national classification and IPC

**B. FIELDS SEARCHED**

Minimum documentation searched (classification system followed by classification symbols)

C04B38/00; C01B33/32; C01B33/40; C01B33/42; C04B12/04; C04B28/26; C04B35/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2016-135723 A (UNIV YAMAGUCHI) 28 July 2016 (2016-07-28)<br>claims 1-5 | 1-7 |
| A | YAN, Shu. Effects of high-temperature exposure on properties of lightweight geopolymer foams incorporating diatomite powders. International Journal of Applied Ceramic Technology. 2021, vol. 18, no. 6, pp. 2158-2168<br>abstract, 2.1 Materials and form preparation | 1-7 |
| A | US 2016/0304402 A1 (THE BOARD OF TRUSTEES OF THE UNIVERSITY OF ILLINOIS) 20 October 2016 (2016-10-20)<br>paragraphs [0054], [0055] | 1-7 |
| A | US 2021/0087109 A1 (BOYCE, Michael R.) 25 March 2021 (2021-03-25)<br>claims 1-32 | 1-7 |
| A | JP 2011-219281 A (FURUKAWA ELECTRIC CO LTD) 04 November 2011 (2011-11-04)<br>claim 1 | 1-7 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **14 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/047601** |

**C.    DOCUMENTS CONSIDERED TO BE RELEVANT**

| Category* | Citation of document, with indication, where appropriate, of the relevant passages | Relevant to claim No. |
| --- | --- | --- |
| P, A | JP 2022-178855 A (JSP CORPORATION) 02 December 2022 (2022-12-02) claims 1-3 | 1-7 |

Form PCT/ISA/210 (second sheet) (January 2015)

INTERNATIONAL SEARCH REPORT
Information on patent family members

International application No.

**PCT/JP2022/047601**

| Patent document cited in search report | | | Publication date (day/month/year) | Patent family member(s) | Publication date (day/month/year) |
|---|---|---|---|---|---|
| JP | 2016-135723 | A | 28 July 2016 | (Family: none) | |
| US | 2016/0304402 | A1 | 20 October 2016 | (Family: none) | |
| US | 2021/0087109 | A1 | 25 March 2021 | (Family: none) | |
| JP | 2011-219281 | A | 04 November 2011 | (Family: none) | |
| JP | 2022-178855 | A | 02 December 2022 | (Family: none) | |

Form PCT/ISA/210 (patent family annex) (January 2015)

**EP 4 458 789 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011219281 A